(19) Europäisches Patentamt

European Patent Office

Office européen des brevets

(11) **EP 1 576 306 B1**

(12) **FASCICULE DE BREVET EUROPEEN**

(45) Date de publication et mention
de la délivrance du brevet:
**18.10.2006 Bulletin 2006/42**

(51) Int Cl.:
***F16H 61/16*** *(2006.01)*

(21) Numéro de dépôt: **03799672.5**

(22) Date de dépôt: **19.12.2003**

(86) Numéro de dépôt international:
**PCT/FR2003/003847**

(87) Numéro de publication internationale:
**WO 2004/059196 (15.07.2004 Gazette 2004/29)**

(54) **PROCEDE ET UN SYSTEME DE COMMANDE D'UNE TRANSMISSION AUTOMATIQUE**

VERFAHREN UND STEUEREINRICHTUNG FÜR EIN AUTOMATISCHES GETRIEBE

METHOD AND SYSTEM FOR CONTROLLING AN AUTOMATIC TRANSMISSION

(84) Etats contractants désignés:
**BE DE ES GB IT**

(30) Priorité: **23.12.2002 FR 0216480**

(43) Date de publication de la demande:
**21.09.2005 Bulletin 2005/38**

(73) Titulaire: **Renault s.a.s.**
**92100 Boulogne Billancourt (FR)**

(72) Inventeurs:
• **DE LEPINE, Philippe**
**F-92000 Nanterre (FR)**

• **TAFFIN, Christian**
**F-78320 Le Mesnil Saint Denis (FR)**

(74) Mandataire: **Rougemont, Bernard**
**RENAULT TECHNOCENTRE**
**Département Propriété Intellectuelle**
**Sce 00267 TCR GRA 2 36**
**1, avenue du Golf**
**78288 Guyancourt cedex (FR)**

(56) Documents cités:
**WO-A-00/25046          WO-A-97/29307**
**DE-A- 3 922 040        DE-A- 10 035 361**
**FR-A- 2 545 567**

**Description**

L'invention concerne un procédé et un système de commande d'une transmission automatique.

De manière classique, les boîtes de vitesses automatiques comportent un calculateur de boîte qui détermine quels sont les rapports à engager et qui séquence le pilotage des actionneurs de la boîte de vitesse automatique pour opérer un changement de rapport. Le calculateur utilise en outre une information de demande de couple destinée au moteur, pour déclencher par exemple une rétrogradation lors d'une augmentation rapide de la demande de couple par le conducteur.

Lorsque la boîte de vitesse automatique est associée à un moteur à allumage commandé, l'information de demande de couple transmise à la boîte de vitesse automatique est fréquemment une mesure de la position d'un papillon dont la position détermine la quantité d'air admis dans les cylindres du moteur. La position du papillon est commandée par exemple par un câble provenant de la position de la pédale d'accélérateur ou par un actionneur piloté par un calculateur. Cependant, dans le cas des moteurs Diesel, l'absence de papillon ne permet pas d'utiliser ce moyen de représentation de la demande de couple. Aussi a-t-il été suggéré de prendre directement une information de position de la pédale d'accélérateur.

Or la position de la pédale d'accélérateur n'est pas toujours représentative du couple délivré effectivement par le moteur. En particulier, lors d'une augmentation brusque de la demande de couple, le couple effectivement délivré par le moteur est en retard par rapport à la demande. Ce retard est intrinsèque au moteur, en particulier au moteur suralimenté par turbocompresseur, qui ne délivre le couple demandé que lorsque le turbocompresseur a atteint sa vitesse de rotation stabilisée. En conséquence de ce retard, les paramètres de gestion d'un changement de rapport ne sont pas adaptés au couple effectivement délivré par le moteur, ni aux conditions réelles qui en découlent telles que des pressions hydrauliques, des délais de séquençage. De plus, ces conditions sont variables au cours du changement de rapport. Il en résulte des changements de rapport dégradés.

Le même problème se pose avec d'autres types de transmissions automatiques.

Les documents WO 97/29307 et FR-A-2 545 567 dévoilent des procédés de commande de boîtes de vitesses automatiques dans lesquels le changement de rapport est inhibé dans certaines circonstances.

L'invention a donc pour objectif de fournir un procédé et un système de commande d'une transmission automatique recevant une information de demande de couple par la position d'une pédale d'accélérateur qui conserve une bonne qualité de changement de rapport malgré un décalage entre le couple demandé au moteur et celui effectivement fourni.

Avec cet objectif en vue, l'invention a pour objet un procédé de commande d'une transmission automatique entraînée par un moteur, la transmission automatique recevant une information de demande de couple, le couple effectivement fourni par le moteur étant en décalage par rapport au couple demandé, caractérisé en ce que, après une variation rapide de la demande de couple, aucun changement de rapport n'est autorisé avant l'écoulement d'un délai de stabilisation prédéterminé.

Ce délai de stabilisation est calibré en fonction du moteur pour que le couple effectivement délivré par le moteur soit peu décalé par rapport à la demande de couple. Ainsi, lorsque le changement de rapport est initié, le décalage est faible et les conditions réelles dans la transmission automatique sont proches de celles prédites et varient peu. Le changement de rapport est alors effectué dans des conditions normales.

Selon un perfectionnement, lors d'une augmentation rapide de la demande de couple, un changement de rapport est autorisé pendant le délai de stabilisation dès que le couple délivré par le moteur a atteint un seuil prédéterminé. Ainsi, l'autorisation de changement de rapport est donnée dès que possible, quand les conditions pour le changement sont correctes, sans attendre la fin du délai de stabilisation.

De manière avantageuse, le seuil de couple prédéterminé est fonction de la demande de couple ou de la vitesse du moteur.

De manière particulière, pour détecter une variation rapide de la demande de couple, on détermine que, si la variation de la demande de couple sur une période d'échantillonnage prédéterminée est supérieure à un seuil de vitesse prédéterminé, on déduit que la variation de la demande de couple est rapide. On dispose ainsi d'un critère simple pour établir que la variation de la demande est rapide.

L'invention a aussi pour objet un système de commande d'une transmission automatique, le système comportant un moteur pour entraîner la transmission automatique, une unité de commande de la transmission automatique, des moyens d'information pour délivrer une information de demande de couple à la transmission automatique et au moteur, le couple effectivement fourni par le moteur étant en décalage par rapport au couple demandé, caractérisé en ce que l'unité de commande détermine qu'après une variation rapide de la demande de couple, aucun changement de rapport n'est autorisé pendant un délai de stabilisation prédéterminé.

L'invention sera mieux comprise et d'autres particularités et avantages apparaîtront à la lecture de la description qui va suivre, la description faisant référence aux dessins annexés parmi lesquels :

- la figure 1 est une vue schématique d'un système conforme à l'invention ;

- la figure 2 est un diagramme illustrant un décalage de couple ;

- la figure 3 est un diagramme fonctionnel d'un procédé conforme à l'invention.

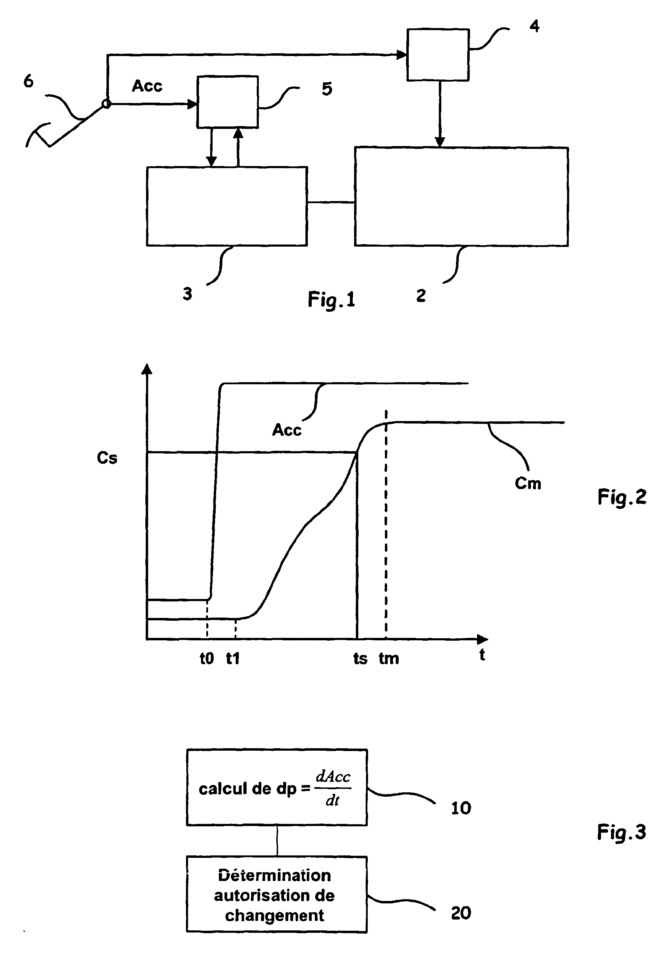

Le système 1 de la figure 1 comporte un moteur 2 accouplé à une boîte de vitesses automatique 3, un contrôleur 4 pour commander le moteur et une unité de commande 5 pour commander la boîte de vitesses automatique 3. Une pédale d'accélérateur 6 délivre une information de demande de couple sous la forme d'une position de la pédale d'accélérateur Acc à l'unité de commande 5 et au contrôleur 4.

En fonctionnement, le moteur délivre un couple Cm transmis à la boîte de vitesses automatique. La boîte de vitesses automatique transmet un couple vers les roues non représentées d'entraînement d'un véhicule, non représenté.

La figure 2 représente sur un graphique temporel, d'une part la position de pédale représentant la demande de couple Acc, et d'autre part le couple Cm délivré par le moteur 2. La position de la pédale Acc est constante jusqu'à un instant t0. Ensuite, elle augmente brusquement et reste à un niveau élevé.

A partir d'un instant t1, après t0, le couple délivré Cm augmente progressivement jusqu'à se stabiliser à un niveau élevé correspondant à la demande de couple.

L'unité de commande 5 met en oeuvre le procédé selon l'invention en effectuant en permanence la procédure exposée sur la figure 3. Dans une première étape 10, la dérivée de la position de la pédale d'accélérateur Acc est évaluée. A titre d'exemple, la dérivée dp est calculée par la formule :

$$dp = \frac{Acc(t) - Acc(t - De)}{De}$$

dans laquelle t est l'instant courant, et De est une période d'échantillonnage.

Dans une deuxième étape 20, une autorisation de rétrogradation Ar est évaluée. D'abord, si la dérivée dp est inférieure à un seuil de vitesse prédéterminé Sdp, l'autorisation de rétrogradation est donnée. Une demande de rétrogradation est déterminée par le calculateur, en fonction d'autres algorithmes classiques qui ne sont pas décrits ici. Une demande de rétrogradation présentée est autorisée.

Sinon, le décompte d'un délai de stabilisation Ds est commencé. Pendant ce délai Ds, si le couple délivré par le moteur Cm dépasse un seuil de couple prédéterminé Cs, alors l'autorisation de rétrogradation est donnée. En tout état de cause, l'autorisation de rétrogradation est donnée à l'expiration du délai de stabilisation Ds.

En se référant à la figure 2, le couple Cm atteint le seuil de couple Cs à l'instant ts. Dans le cas représenté, le délai de stabilisation Ds, déclenché à t0, expire à tm, après ts. Dans ce cas, l'autorisation de déclenchement Ar est donnée à l'instant ts. Si tm était inférieur à ts, l'autorisation de déclenchement Ar serait donnée à l'instant tm, à l'expiration du délai de stabilisation Ds.

A titre d'exemple, le délai de stabilisation est de 300 ms, et le seuil de couple prédéterminé est de 75 % du couple nominal du moteur. Cependant, il est possible de moduler le seuil de couple Cs en fonction de la demande de couple Acc et des conditions de fonctionnement du moteur telles que la vitesse de rotation.

**Revendications**

1. Procédé de commande d'une transmission automatique (3) entraînée par un moteur (2), la transmission automatique (3) recevant une information de demande de couple (Acc), le couple (Cm) effectivement fourni par le moteur (2) étant en décalage par rapport au couple demandé, **caractérisé en ce que**, lorsque la dérivée dans le temps de la demande de couple dépasse un seuil prédéterminé, traduisant une variation rapide de la demande de couple (Acc), aucun changement de rapport n'est autorisé avant l'écoulement d'un délai de stabilisation prédéterminé.

2. Procédé de commande selon la revendication 1, dans lequel lors d'une augmentation rapide de la demande de couple (Acc), un changement de rapport est autorisé pendant le délai de stabilisation (Ds) dès que le couple délivré par le moteur (2) a atteint un seuil de couple prédéterminé (Cs).

3. Procédé de commande selon la revendication 2, dans lequel le seuil de couple (Cs) prédéterminé est fonction de la demande de couple (Acc).

4. Procédé de commande selon la revendication 2, dans lequel le seuil de couple prédéterminé est fonction de la vitesse du moteur.

5. Procédé de commande selon la revendication 1, dans lequel, pour détecter une variation rapide de la demande de couple (Acc), on détermine que, si la variation de la demande de couple (Dp) sur une période d'échantillonnage (De) prédéterminée est supérieure à un seuil de vitesse (Sdp) prédéterminé, on déduit que la variation de la demande de couple est rapide.

6. Système de commande d'une transmission automatique (3), le système comportant un moteur (2) pour entraîner la transmission automatique (3), une unité de commande (5) de la transmission automatique (3), des moyens d'information (6) pour délivrer une information de demande de couple à la transmission automatique (3) et au moteur (2), le couple (Cm) effectivement fourni par le moteur (2) étant en décalage par rapport au couple demandé, **caractérisé en ce que** l'unité de commande (5) détermine qu'après une variation rapide de la demande de couple (Acc), aucun changement de rapport n'est autorisé pendant un délai de stabilisation prédéterminé (Ds).

## Claims

1. Method of controlling an automatic transmission (3) driven by a motor (2), the automatic transmission (3) receiving a torque demand item of information (Acc), the torque (Cm) actually supplied by the motor (2) being offset relative to the torque demanded, **characterized in that**, when the drift over time of the torque demand exceeds a predetermined threshold, reflecting a rapid variation in the torque demand (Acc), no change of ratio is allowed before a predetermined stabilization time has elapsed.

2. Control method according to Claim 1, in which, on a rapid increase in the torque demand (Acc), a change of ratio is allowed during the stabilization time (Ds) when the torque delivered by the motor (2) has reached a predetermined torque threshold (Cs).

3. Control method according to Claim 2, in which the predetermined torque threshold (Cs) is dependent on the torque demand (Acc).

4. Control method according to Claim 2, in which the predetermined torque threshold is dependent on the speed of the motor.

5. Control method according to Claim 1, in which, to detect a rapid variation in the torque demand (Acc), it is determined that, if the variation in the torque demand (Dp) over a predetermined sampling period (De) is greater than a predetermined speed threshold (Sdp), it is deduced that the variation in the torque demand is rapid.

6. System for controlling an automatic transmission (3), the system comprising a motor (2) to drive the automatic transmission (3), a control unit (5) controlling the automatic transmission (3), information means (6) for delivering a torque demand item of information to the automatic transmission (3) and to the motor (2), the torque (Cm) actually supplied by the motor (2) being offset relative to the torque demanded, **characterized in that** the control unit (5) determines that, after a rapid variation in the torque demand (Acc), no change of ratio is allowed for a predetermined stabilization time (Ds).

## Patentansprüche

1. Verfahren zur Steuerung eines automatischen Getriebes (3), das von einem Motor (2) angetrieben wird, wobei das automatische Getriebe (3) eine Drehmomentanforderungsinformation (Acc) erhält, wobei das von dem Motor (2) tatsächlich gelieferte Drehmoment (Cm) bezüglich des angeforderten Drehmoments versetzt ist, **dadurch gekennzeichnet, dass**, wenn die Zeitabweichung der Drehmomentanforderung eine vorbestimmte Schwelle überschreitet, was eine schnelle Änderung der Drehmomentanforderung (Acc) widerspiegelt, keine Übersetzungsverhältnisänderung vor Ablauf einer vorbestimmten Stabilisationszeit gestattet wird.

2. Steuerverfahren nach Anspruch 1, bei dem bei einem schnellen Anstieg der Drehmomentanforderung (Acc) während der Stabilisationszeit (Ds) eine Übersetzungsverhältnisänderung gestattet wird, sobald das von dem Motor (2) gelieferte Drehmoment eine vorbestimmte Drehmomentschwelle (Cs) erreicht hat.

3. Steuerverfahren nach Anspruch 2, bei dem die vorbestimmte Drehmomentschwelle (Cs) von der Drehmomentanforderung (Acc) abhängt.

4. Steuerverfahren nach Anspruch 2, bei dem die vorbestimmte Drehmomentschwelle von der Drehzahl des Motors abhängt.

5. Steuerverfahren nach Anspruch 1, bei dem zur Erfassung einer schnellen Änderung der Drehmomentanforderung (Acc) bestimmt wird, dass, wenn die Änderung der Drehmomentanforderung (Dp) über eine vorbestimmte Samplingperiode (De) größer ist als eine Drehzahlschwelle (Sdp), abgeleitet wird, dass die Änderung der Drehmomentanforderung schnell ist.

6. System zur Steuerung eines automatischen Getriebes (3), wobei das System einen Motor (2) zum Antrieb des automatischen Getriebes (3), eine Steuereinheit (5) zur Steuerung des automatischen Getriebes (3) und Informationsmittel (6) zur Lieferung einer Drehmomentanforderungsinformation an das automatische Getriebe (3) und an den Motor (2) aufweist, wobei das von dem Motor (2) tatsächlich gelieferte Drehmoment (Cm) bezüglich des angeforderten Drehmoments versetzt ist, **dadurch gekennzeichnet, dass** die Steuereinheit (5) bestimmt, dass nach einer schnellen Änderung der Drehmomentanfrage (Acc) während einer vorbestimmten Stabilisationszeit (Ds) keine Übersetzungsverhältnisänderung gestattet wird.

**Fig.1**

**Fig.2**

$$\text{calcul de } dp = \frac{dAcc}{dt}$$

10

Détermination
autorisation de
changement

20

**Fig.3**